# EUROPÄISCHE PATENTSCHRIFT

(11) **EP 2 607 140 B1**
(45) Veröffentlichungstag und Bekanntmachung des Hinweises auf die Patenterteilung: **12.02.2020**
(21) Anmeldenummer: 12197110.5
(22) Anmeldetag: 14.12.2012
(51) Int. Cl.: B60K 28/02, B60K 28/06, G08B 31/00, G08B 21/06

(54) **Verfahren zum Erzeugen und Auslösen einer Pausenempfehlung**
Method for generating and triggering a pause recommendation
Procédé de production et de déclenchement d'une recommandation de pause

(30) Priorität: 24.12.2011 DE 102011122414
(43) Veröffentlichungstag der Anmeldung: 26.06.2013
(73) Patentinhaber: Volkswagen Aktiengesellschaft, 38440 Wolfsburg (DE)
(72) Erfinder: Baumgarten, Thorb, 10115 Berlin (DE); Gehring, Carsten, 13189 Berlin (DE); Hauptvogel, Andreas, 14532 Stahnsdorf (DE); Leicher, Andreas, 12205 Berlin (DE)

(56) Entgegenhaltungen:
- EP-A1- 1 548 678
- DE-A1-102005 026 457
- DE-A1-102008 056 593
- DE-A1-102009 009 975
- DE-A1-102010 053 069
- DE-B3-102004 056 686

## Beschreibung

Die Erfindung betrifft ein Verfahren zum Erzeugen und Auslösen einer Pausenempfehlung an den Fahrer eines Fahrzeuges.

Um die Sicherheit im Straßenverkehr durch Erkennen von Unaufmerksamkeiten oder Müdigkeit eines Kraftfahrzeugführers zu verbessern, sind Verfahren zur Bestimmung eines Vigilanzzustandes, also eines Aufmerksamkeitszustandes, des Kraftfahrzeugführers bekannt. Das Ziel dieser Verfahren ist es, die Sicherheit im Straßenverkehr zu verbessern, in dem ein ungewöhnliches Verhalten des Kraftfahrzeugführers detektiert wird und darauf aufmerksam gemacht wird. Das ungewöhnliche Verhalten kann hierbei beispielsweise durch Unaufmerksamkeit oder Müdigkeit entstehen. Zumeist wird durch Müdigkeit das Reaktionsvermögen des Kraftfahrzeugführers derart beeinflusst, dass Reflexe oder Reaktionen auf bestimmte Fahrsituationen langsamer, zeitverzögerter und/ oder unsicherer erfolgen.

Aus DE 102 18 676 A1 ist ein Boardcomputer für ein Fahrzeug bekannt, der unter Berücksichtigung von Schlafinformationen über den letzten Schlaf und von sensorermittelten Einflussgrößen Informationen über die aktuelle Müdigkeit des Fahrers und ein zeitliches Müdigkeitsprofil liefert. Hierbei werden dem Fahrverhalten des Fahrers entsprechende Messdaten und einer Fahrsituation des Fahrzeuges entsprechende Messdaten dem Boardcomputer übermittelt, der aus diesen Eingaben eine Müdigkeitsvorhersage für den Verlauf der gesamten Fahrt liefert. Zu den Eingaben gehören Informationen die der Fahrer eingibt, beispielsweise Startort und Zielort und Informationen die von Fahrzeugsensoren geliefert werden. Hierzu gehören beispielsweise Informationen über die Einschaltung oder Ausschaltung des Scheibenwischers oder der Beleuchtung, gegebenenfalls Informationen eines Regensensors oder eines Tageslichtsensor, Informationen über die Fahrgeschwindigkeit und Lenkradbetätigung und dergleichen. Alle den Informationen entsprechenden Messdaten müssen gespeichert werden. Insofern bestehen hohe Anforderungen an einen Speicherplatz, da große Datenmengen über die gesamte Fahrzeit vorgehalten werden müssen.

DE 10 2009 009 975 A1 offenbart ein Verfahren zur Ermittlung eines die Aufmerksamkeit eines Fahrers während einer Fahrt beschreibenden Aufmerksamkeitswertes. Hierbei werden in einer vorbestimmten Zeitdauer in großen Abständen einzelne Messwerte aufgenommen und aus diesen Messwerten innerhalb der Zeitdauer ein Statistikwert ermittelt. Der Statistikwerk fließt dann in die Ermittlung eines Aufmerksamkeitswertes ein. Die Zeitdauer innerhalb die Auswertung vorgenommen wird, wird kontinuierlich wiederholt.

EP 1 548 678 A1 offenbart ein Verfahren zum Erkennen von Unaufmerksamkeit des Fahrers eines Fahrzeugs. Es ist vorgesehen, dass Lenkaktionen ausgewertet werden und anhand einer Lenkruhephase und einer anschließenden Lenkaktion auf eine Unaufmerksamkeit des Fahrers geschlossen wird.

Der Erfindung liegt die Aufgabe zugrunde, ein Verfahren zum Erzeugen und Auslösen einer Pausenempfehlung anzugeben, mittels dem eine hohe Vorhersagegüte einer Müdigkeitsprognose möglich ist und das mit einem geringem Speicherbedarf auskommt. Erfindungsgemäß wird diese Aufgabe durch ein Verfahren mit den in Anspruch 1 genannten Merkmalen gelöst. Dadurch, dass zum Erzeugen und Auslösen einer Pausenempfehlung an den Fahrer eines Fahrzeuges Messdaten von einem Fahrverhalten des Fahrers und Messdaten von Fahrsituationen des Fahrzeuges ermittelt werden, diese Messdaten in wenigstens zwei unterschiedlichen Zeitbereichen betrachtet werden, wenigstens ein vorgebbarer repräsentativer Wert der Messdaten in den wenigstens zwei Zeitbereichen ermittelt wird und die Pausenempfehlung mit Hilfe eines vorgegebenen Vigilanzindex auf Basis der wenigstens zwei repräsentativen Werte errechnet wird, ist vorteilhaft möglich, die Vorhersagegüte bei verringerten Speicherbedarf zu verbessern. Aufgrund des geringen Speicherbedarfes können viele relevante Situationen und Fahrdaten in die Müdigkeitsprognose einbezogen werden. Ein großer Teil der müdigkeitsbedingten Varianz erschließt sich aus den Veränderungen der Messdaten innerhalb unterschiedlicher Zeitbereiche. Durch die Verwendung von spezifischen Zeitbereichen, dass heißt von spezifischen Fensterfunktionen zur Abbildung von unmittelbaren, kurzfristigen, mittelfristigen und langfristigen Veränderungen von Verhaltensvariablen, Fahrsituationen und deren Wechselwirkungen kann ein großer Teil der müdigkeitsbedingten Varianz algorithmisch verwendet werden, ohne dass große Datenmengen über die gesamte Fahrzeit vorgehalten werden müssen.

In bevorzugter Ausgestaltung der Erfindung ist vorgesehen, dass die Messdaten in einem unmittelbaren Zeitbereich, einem kurzfristigen Zeitbereich, einem mittelfristigen Zeitbereich und einem langfristigen Zeitbereich betrachtet werden. Somit kann in vorteilhafter Weise durch diese besondere Fensterung und Kennwertbildung die Verhaltenscharakteristik einer längeren Fahrt ohne komplexe Datenhaltung mit einer kleinen Anzahl von Werten gespeichert werden, so dass kurzfristige, mittelfristige und langfristige Veränderungen und deren Unterschiede und Wechselwirkungen im Fahrverhalten und im Kontext der Fahrsituation zur Müdigkeitsprognose herangezogen werden können.

In weiterer bevorzugter Ausgestaltung der Erfindung ist vorgesehen, dass als wenigstens ein vorgebbarer repräsentativer Wert ein Mittelwert, ein Minimum, ein Maximum und/ oder eine Standardabweichung der Messdaten in dem jeweiligen Zeitbereich herangezogen wird. So lassen sich vorteilhaft die Messdaten zwischen den einzelnen Zeitbereichen vergleichen und somit auf Basis dieser repräsentativen Messwerte für die jeweiligen Zeitbereiche die Müdigkeitsprognose erstellen. Das Abspeichern kann auf die repräsentativen Werte innerhalb der jeweiligen Zeitbereiche begrenzt werden, so dass insgesamt kein großes Speichervolumen benötigt wird.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert.

Es zeigen:
- Figur 1: ein Flussdiagramm des erfindungsgemäßen Verfahrens
- Figur 2: ein beispielhafter Kennlinienverlauf
- Figur 3: ein Flussdiagramm für den Kennlinienverlauf gemäß Figur 2
- Figur 4: beispielhafte Verläufe der erfindungsgemäß ermittelten Variablen und
- Figur 5: ein Blockschaltbild eines Kraftfahrzeug-Assistenzsystems

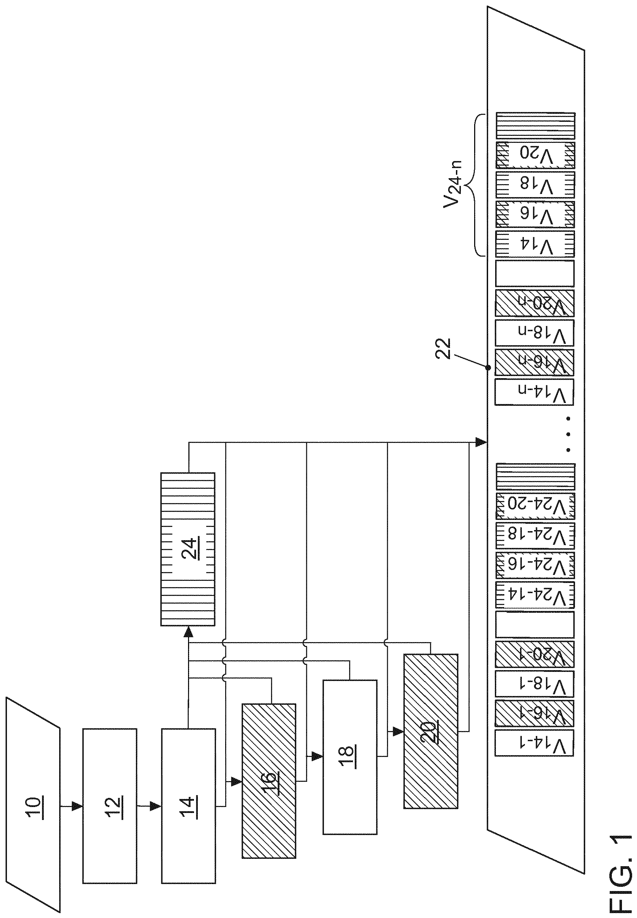

Figur 1 zeigt in einem Flussdiagramm die erfindungsgemäße Ermittlung von Messdaten mit deren Hilfe über einen vorgegebenen Vigilanzindex eine Pausenempfehlung errechnet wird. Zunächst werden in einem ersten Schritt 10 die einem Fahrverhalten eines Fahrers eines Kraftfahrzeuges entsprechenden Messdaten und die einer Fahrsituation des Fahrzeuges entsprechenden Messdaten ermittelt. Diese Messdaten werden beispielsweise durch Eingabe von Informationen des Fahrers an ein Fahrer-Assistenzsystem, beispielsweise ein Navigationssystem, und von Fahrzeugsensoren die Fahrzustände des Fahrzeuges und von Sensoren die Aktivitäten des Fahrzeugführers erfassen, geliefert. Diese Messwerte repräsentieren beispielsweise Parameter aus dem Lenkwinkel/ Lenkmoment, wie beispielsweise Lenkpausendauer, Lenkreaktionsamplitude und das gewichtete Produkt aus Lenkpausendauer und Lenkreaktionsamplitude, Kurvigkeit der Strecke, Geschwindigkeit, Fahrzeit, Tageszeit, Streckentyp, Bedienaktivitäten, beispielsweise von Entertainmentausstattungen, Scheibenwischern, Witterung, Verkehrsdichte, aktivierte Fahrerassistenzsysteme und dergleichen. Hier können eine Vielzahl bekanntermaßen die Müdigkeit eines Fahrzeugführers beeinflussende Messdaten erfasst werden.

In einem Schritt 12 werden dann aus dieser Vielzahl von Messdaten laufend, dass heißt über die Fahrzeit, die Messdaten auf den Eintritt bestimmter Ereignisse detektiert. Die zur Verfügung stehenden Messdaten werden also so aufbereitet, dass aus den einzelnen Signalverläufen, die eine Müdigkeit eines Fahrzeugführers beeinflussenden Ereignisse und Kennwerte erfasst werden. Es stehen also über Zeit parallel eine Vielzahl von Messdaten zur Verfügung, die sich fortlaufend entsprechend der tatsächlichen Fahrsituation des Fahrzeuges und des tatsächlichen Fahrverhaltens des Fahrers des Fahrzeuges ändern.

Diese sich fortlaufend über die Zeit verändernden Kennwerte werden wie nachfolgend erläutert in unterschiedlichen Zeitbereichen betrachtet. Hierzu werden die aufbereiteten Messdaten in vier Zeitbereichen 14, 16, 18 und 20 betrachtet. Jeder der Zeitbereiche 14, 16, 18 und 20 ist durch eine definierte Zeitspanne gekennzeichnet, die für jeden der Zeitbereiche 14, 16, 18 und 20 festgelegt ist. Die Zeitspanne für den Zeitbereich 14 beträgt beispielsweise < 1 Minute, die Zeitspanne für den Zeitbereich 16 beispielsweise < 15 Minuten, die Zeitspanne für den Zeitbereich 18 beispielsweise > 15-120 Minuten und die Zeitspanne für den Zeitbereich 20 beispielsweise > 120 Minuten.

Nach anderen nicht erläuterten Ausführungsvarianten kann die Anzahl der Zeitbereiche variieren und auch die Zeitspannen innerhalb der Zeitbereiche anders gewählt sein. Insofern sind die Angaben lediglich beispielhaft.

Die im Schritt 10 ermittelten und im Schritt 12 vor verarbeiteten Messdaten werden entsprechend der festgelegten Zeitbereiche 14, 16, 18 und 20 betrachtet. In jedem der Zeitbereiche werden hierzu die die Müdigkeit eines Fahrzeugführers beeinträchtigenden Messdaten auf wenigstens einen vorgebbaren repräsentativen Wert betrachtet. Dies bedeutet innerhalb jeder Zeitspanne wird dieser vorgebbare repräsentative Wert des überwachten Messwertes ermittelt. Dies kann beispielsweise ein Mittelwert des jeweiligen Messwertes in den jeweiligen Zeitbereich sein, Der repräsentative Wert kann auch ein Minimum oder ein Maximum des jeweiligen Messwertes im jeweiligen Zeitbereich sein. Ferner kann der repräsentative Wert beispielsweise eine Standardabweichung der Messwerte in den jeweiligen Zeitbereichen sein. Im Ergebnis der "Fensterung" der Messwerte in den Zeitbereichen 14, 16, 18 und 20 wird für jeden der Zeitbereiche 14, 16 , 18 und 20 jeweils ein repräsentativer Wert für jeden der die Müdigkeit beeinflussenden Kennwerte, die sich auch dem Fahrverhalten des Fahrers und der Fahrsituation des Fahrzeuges ergeben, bereitgestellt.

Diese von den jeweiligen Zeitbereichen 14, 16, 18 und 20 ermittelten repräsentativen Werte werden einerseits direkt einem Pool 22 zugeführt, wo diese repräsentativen Werte unter der Beachtung aus welchen Zeitbereich diese gewonnen werden, abgespeichert werden.

Zusätzlich werden die aus den einzelnen Zeitbereichen 14, 16, 18 und 20 gelieferten Messwerte in einem Schritt 24 kumuliert. Diese kumulierten Messwerte werden ebenfalls im Pool 22 zur Verfügung gestellt.

Dem Pool 22 stehen somit eine Anzahl von Vorhersagevariablen für die Müdigkeitsprognose zur Verfügung die sich einerseits aus den jeweiligen Zeitbereichen 14, 16, 18 und 20 gelieferten Variablen und andererseits aus den von der Kumulation gelieferten Variablen ergibt. Angedeutet sind diese Variablen im Pool 22 mit V14-1 für in einem ersten Zeitbereich 14 übermittelten repräsentativen Wert, mit V16-1 für in einem ersten Zeitbereich 16 übermittelten repräsentativen Wert, mit V18-1 für in einem ersten Zeitbereich 18 übermittelten repräsentativen Wert und V20-1 für einen im Zeitbereich 20 übermittelten repräsentativen Wert. Zusätzlich sind die kumulierten Variablen V24-14, V24-16, V24-18 und V24-20 im Pool 22 abgelegt. Diese kumulierten Werte ergeben sich aus den in nacheinander folgenden aus einer Kumulierung der nacheinander folgenden Zeitabschnitten der Zeitbereiche 14, 16, 18 und 20 ermittelten repräsentativen Werte.

Entsprechend der Fahrzeit des Fahrzeuges stehen somit jeweils eine Vielzahl von Variablen zur Verfügung, wie hier angedeutet mit V14-n, V16-n, V18-n, V20-n bzw. V24-n.

Es wird also deutlich, dass in den Pool 22 nicht sämtliche das Fahrverhalten des Fahrers und die Fahrsituation des Fahrzeugs betreffende ermittelte Messdaten abgelegt werden, sondern nur die in den Zeitbereichen 14, 16, 18 bzw. 20 ermittelten repräsentativen Werte.

Im Pool 22 liegen somit Daten, die einerseits dem unmittelbaren Fahrverhalten bzw. unmittelbaren Fahrsituation im Zeitbereich < 1min entsprechen. Dies ist beispielsweise ein Mittelwert der letzten Minute, ein Minimum der letzten Minute, ein Maximum der letzten Minute und/ oder eine Standardabweichung der letzten Minute. Ferner liegen dem Pool 22 Daten, die kurzfristige Aspekte des Fahrverhaltens und der Fahrsituation, beispielsweise im Zeitbereich von 15 Minuten entsprechen. Dies kann ein Mittelwert der letzten 15 Minuten, ein Minimum der letzten 15 Minuten, ein Maximum der letzten 15 Minuten und/ oder eine Standardabweichung der letzten 15 Minuten sein. Ferner liegen im Pool 22 Daten, die mittelfristige Aspekte des Fahrverhaltens und der Fahrsituation, beispielsweise im Zeitbereich von 15 bis 120 Minuten entsprechen. Die Daten können beispielsweise eine gewichtete Differenz zwischen aktuellem und 1-n vorausgehenden Zeitfenstern und Quotienten aus aktuellen und 1-n vorausgehenden Zeitfenstern sein.

Ferner liegen im Pool 22 Daten, die langfristige Aspekte über die Betrachtung der Historie der gesamten Fahrt des Fahrzeuges entsprechen. Diese ergeben sich beispielsweise aus der Kumulation der Parameter und Kennwerte aus den unmittelbaren, kurzfristigen und mittelfristigen Zeitbereichen.

Die Errechnung einer Pausenempfehlung mit Hilfe eines vorgegebenen Vigilanzindex - der bekanntermaßen zuvor theoretisch ermittelt wurde - und Grundlage für eine Müdigkeitsprognose eines Fahrzeugführers ist, erfolgt nunmehr aufgrund der im Pool 22 abgelegten, dem Fahrverhalten des Fahrers und der Fahrsituation des Fahrzeuges entsprechenden repräsentativen Werte. Die Müdigkeitsprognose basiert hierbei auf einer Regressionsgleichung der dreißig besten Vorhersageparameter im Pool 22. Eine Regressionsgleichung ist eine Gleichung, mit der die Ausprägung eines Merkmals (Müdigkeit) aufgrund der Ausprägung eines anderen korrelierenden Merkmals (Variablen im Pool 22) vorhergesagt werden kann.

Es wird deutlich, dass die Errechnung der Pausenempfehlung nicht auf eine Vielzahl über die gesamte Fahrtdauer ermittelten einzelnen Messdaten, die das Fahrverhalten des Fahrers und die Fahrsituation des Fahrzeuges entsprechend zurückgreift, sondern auf einer aus diesen Messdaten in wenigstens einen Zeitbereich ermittelten repräsentativen Wert zurückgreift. Somit verringert sich der Speicherbedarf für die Speicherung von Kennwerten für die Prognose der Müdigkeit erheblich.

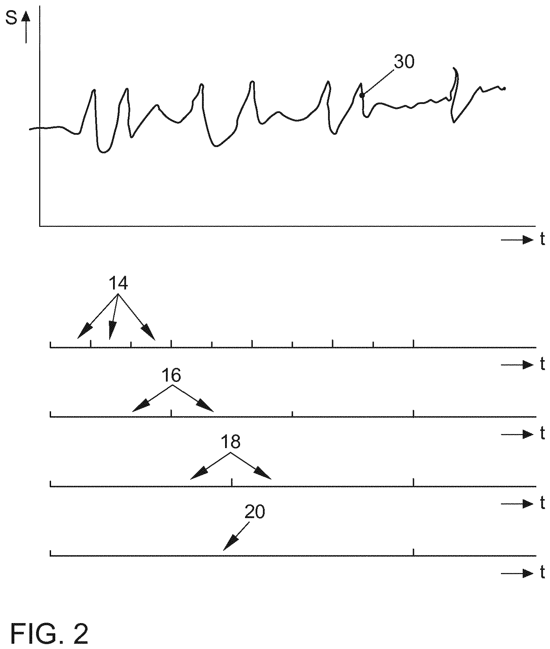

In Figur 2 ist beispielhaft der Verlauf 30 eines Messsignals S über der Fahrzeit t eines Fahrzeuges gezeigt. Bei dem Messsignal S kann es sich beispielsweise um eine Lenkreaktionsamplitude handeln, die aus einer Detektion eines Lenkwinkels einer Lenkung des Fahrzeuges ergibt. Somit repräsentiert das Messsignal S ein Fahrverhalten eines Fahrers des Kraftfahrzeuges. Der ermittelte Verlauf des Messsignals S entspricht dem Verfahrensschritt 10 wie in Figur 1 dargestellt.

Dieser Verlauf des Signale S wird nunmehr in unterschiedlichen Zeitbereichen betrachtet. Hierzu wird über die Fahrzeit t das Messsignal S in den Zeitbereichen 14, 16, 18 und 20 betrachtet. Vor der Betrachtung wird das im Schritt 10 ermittelte breitbandige Signal gemäß Schritt 12 in Figur 1 auf relevante Ereignisse überwacht, die auf eine Unaufmerksamkeit oder Müdigkeit des Fahrers des Kraftfahrzeuges hindeuten könne. Dies ist beispielsweise bei dem angenommenen Beispiel der Überwachung der Lenkreaktionsamplitude eine Beobachtung des Messsignals S darauf hin, ob auf einer Zeitspanne mit keiner Lenkwinkeländerung eine plötzlich abrupte Lenkwinkelkorrektur erfolgt. Eine Erfassung dieser Signale ist bekannt und soll im Rahmen der vorliegenden Beschreibung nicht detaillierter ausgeführt werden.

Der Verlauf des Signales S wird also daraufhin vorverarbeitet, ob in den einzelnen Zeitbereichen 14, 16, 18 und 20 derartige Ereignisse auftreten. Die Ereignisse in den jeweiligen Zeitbereichen 14, 16, 18 und 20 werden dann auf einen repräsentativen Wert innerhalb der einzelnen Zeitbereiche 14, 16, 18 und 20 untersucht. Dieser repräsentative Wert kann beispielsweise ein Minimum, ein Maximum, ein Mittelwert oder eine Standardabweichung der aus dem Verlauf des Signals S den diktierten Ereignissen entsprechenden Messsignale sein.

Diese repräsentativen Werte werden dann im Pool 22 direkt und über den in Schritt 24 vorgenommenen Kumulierung im Pool 22 zur Verfügung gestellt.

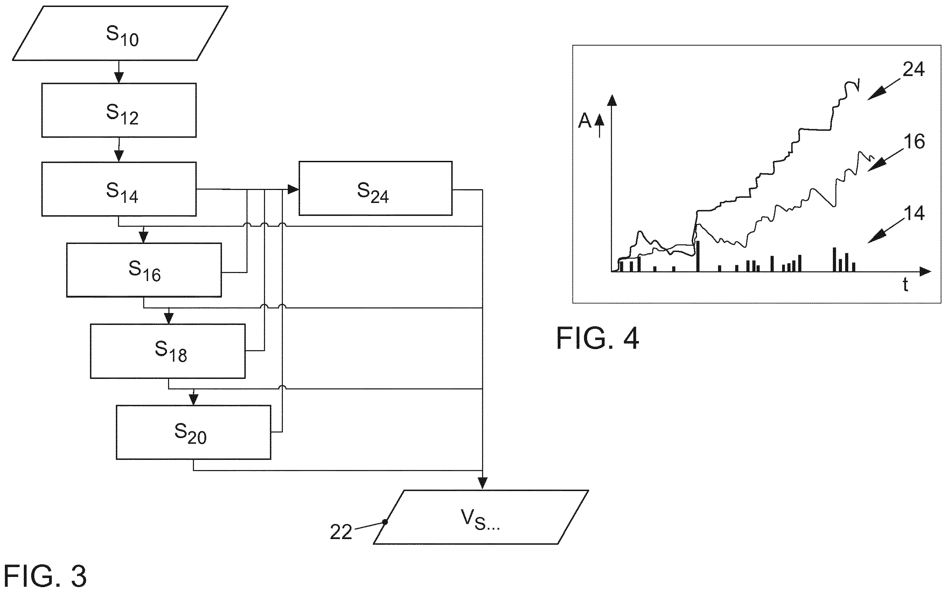

In Figur 3 ist das bereits in Figur 1 beschriebene Flussdiagramm bezogen auf das konkrete Messsignal S gemäß Figur 2 nochmals dargestellt. Im Pool 22 liegen somit die Variablen VS 14-1 bis VS 14-n, VS 16-1 bis VS 16-n, VS 18-1 bis VS 18-n sowie VS 20-1 bis 20-n. Ferner liegen die kumulierten Werte VS 24-14-1 bis VS 24-14-n, VS 24-16-1 bis VS 24-16-n, VS 24-18-1 bis VS 24-18-n sowie VS 24-20-1 bis VS 24-20-n vor.

Im Pool 22 liegen somit eine begrenzte Anzahl von Variablen, die den repräsentativen Werten des Signals S in den Zeitbereichen 14, 16, 18 und 20 entsprechend des tatsächlichen Verlaufes des Messsignals S entsprechen.

In Figur 4 ist beispielhaft ein Kennlinienverlauf von drei der im Beispiel genannten fünf möglichen Variablen gezeigt. Über der Fahrzeit t ist hier eine Ausprägung A der Variablen V gezeigt. Zunächst sind die Werte der Variablen aus der Fensterung im Zeitbereich 14, also aus einer unmittelbaren Fensterung gezeigt. Ferner ist der Verlauf der Variablen aus einem der gleitenden Fenster, hier im Beispiel aus der Fensterung des Signals im Zeitbereich 16 gezeigt. Schließlich ist noch der Verlauf der Variablen aus der Kumulation 24 der Einzelwerte gezeigt. Es wird deutlich, das mit zunehmender Fahrzeit t die Ausprägung der Variablen insbesondere in den gleitenden Fenstern und in der Kumulation ansteigt. Dies entspricht auch der anzunehmenden, zunehmenden Müdigkeit des Fahrzeugfahrers.

Durch eine entsprechende Verarbeitung der ermittelten Verläufe der repräsentativen Werte mittels eines bekannten Vigilanzindex kann eine Müdigkeit des Fahrers detektiert und eine entsprechende Pausenempfehlung an den Fahrer des Kraftfahrzeuges ausgegeben werden. Es wird nochmals deutlich, dass für die Errechnung der Pausenempfehlung nicht mehr der gesamte Verlauf des Signals S ausgewertet werden muss, sondern nur noch über der Fahrzeit auf die ermittelten repräsentativen Werte zurückgegriffen werden muss. Somit sinkt ein Speicherbedarf zur Errechnung der Pausenempfehlung.

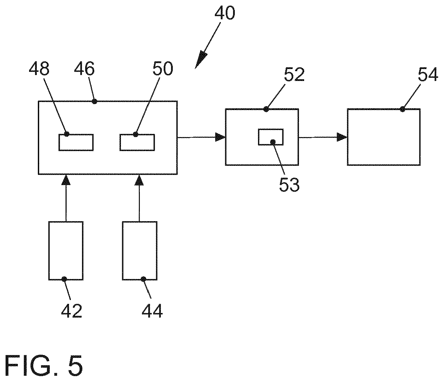

Figur 5 zeigt ein Blockschaltbild eines insgesamt mit 40 bezeichneten Kraftfahrzeug-Assistenzsystems zum Erzeugen und Auslösen einer Pausenempfehlung. Das Kraftfahrzeug-Assistenzsystem 40 umfasst eine Eingabeeinrichtung 42 zum Eingeben von einem Fahrverhalten eines Fahrers des Fahrzeuges entsprechenden Messdaten und einer Eingabeeinrichtung 44 zum Eingeben einer Fahrsituation des Fahrzeuges entsprechenden Messdaten. Die Eingabeeinrichtungen 42 und 44 sind mit einer Auswerteeinrichtung 46 verbunden. Die Auswerteeinrichtung 46 umfasst ein Speichermittel 48 und ein Auswertemodul 50.

Die Auswerteeinrichtung 46 ist mit einem Pausenempfehlungsmodul 52 verbunden. Das Pausenempfehlungsmodul 52 umfasst ein Berechnungsmodul 53 und ist mit einer Ausgabeeinrichtung 54 verbunden.

Das in Figur 5 dargestellte Kraftfahrzeug-Assistenzsystem 40 zeigt folgende Funktion:
Über die Eingabeeinrichtung 42 und 44 werden die im Fahrverhalten des Fahrers bzw. der Fahrsituation des Fahrzeuges entsprechende Messdaten der Auswerteeinrichtung 46 zur Verfügung gestellt. Mittels des Auswertemoduls 50 wird das anhand der Figur 1 erläuterte Verfahren durchgeführt. Die hierbei ermittelten Variablen V werden im Speichermittel 48 abgelegt und stehen der weiteren erläuterten Auswertung während der Fahrzeit t zur Verfügung. Gleichzeitig werden die Variablen V dem Pausenempfehlungsmodul 52 zur Verfügung gestellt, wobei des Pausenempfehlungsmodul 52 anhand der Variablen und des im Berechnungsmodul 53 abgelegten Vigilanzindex eine Pausenempfehlung errechnet und der Ausgabeeinrichtung 54 übergibt, die eine visuelle und/ oder akustische und/ oder haptische Ausgabe der Pausenempfehlung an den Fahrer des Kraftfahrzeuges auslöst.

### Bezugszeichenliste

- 10: Schritt
- 12: Schritt
- 14: Zeitbereich
- 16: Zeitbereich
- 18: Zeitbereich
- 20: Zeitbereich
- 22: Pool
- 24: Schritt

- 30: Verlauf

- 40: Kraftfahrzeug-Assistenzsystem
- 42: Eingabeeinrichtung
- 44: Eingabeeinrichtung
- 46: Auswerteeinrichtung
- 48: Speichermittel
- 50: Auswertemodul
- 52: Pausenempfehlungsmodul
- 53: Berechnungsmodul
- 54: Ausgabeeinrichtung

- A: Ausprägung
- S: Messsignal/ Signal
- V: Variablen
- t: Fahrzeit

## Patentansprüche

1. Verfahren zum Erzeugen und Auslösen einer Pausenempfehlung an den Fahrer eines Fahrzeuges in folgenden Schritten:
- Ermitteln von einem Fahrverhalten des Fahrers entsprechenden Messdaten und/ oder
- Ermitteln von einer Fahrsituation des Fahrzeuges entsprechenden Messdaten **gekennzeichnet durch**,
- Betrachten der Messdaten in wenigstens zwei unterschiedlichen Zeitbereichen
- Ermitteln wenigstens eines vorgegebenen repräsentativen Wertes der Messdaten in jedem dem der wenigstens zwei Zeitbereiche
- Errechnen einer Pausenempfehlung mit Hilfe eines vorgegebenen Vigilanzindex auf Basis der wenigstens zwei repräsentativen Werte
- Ausgeben der Pausenempfehlung an den Fahrer des Fahrzeuges

2. Verfahren nach Anspruch 1 **dadurch gekennzeichnet, dass** die Messdaten in einem Zeitbereich < 1 Minute betrachtet werden.

3. Verfahren nach einem der vorhergehenden Ansprüche **dadurch gekennzeichnet, dass** die Messdaten in einem Zeitbereich < 15 Minuten betrachtet werden.

4. Verfahren nach einem der vorhergehenden Ansprüche **dadurch gekennzeichnet, dass** die Messdaten in einem Zeitbereich 15 bis 120 Minuten betrachtet werden.

5. Verfahren nach einem der vorhergehenden Ansprüche **dadurch gekennzeichnet, dass** die Messdaten in einem Zeitbereich > 120 Minuten betrachtet werden.

6. Verfahren nach einem der vorhergehenden Ansprüche **dadurch gekennzeichnet, dass** die in den unterschiedlichen Zeitbereichen betrachteten Messdaten kumuliert werden.

7. Verfahren nach einem der vorhergehenden Ansprüche **dadurch gekennzeichnet, dass** innerhalb der Zeitbereiche als repräsentativer Wert ein Mittelwert ermittelt wird.

8. Verfahren nach einem der vorhergehenden Ansprüche **dadurch gekennzeichnet, dass** innerhalb der Zeitbereiche als repräsentativer Wert ein Minimum ermittelt wird.

9. Verfahren nach einem der vorhergehenden Ansprüche **dadurch gekennzeichnet, dass** innerhalb der Zeitbereiche als repräsentativer Wert ein Maximum ermittelt wird.

10. Verfahren nach einem der vorhergehenden Ansprüche **dadurch gekennzeichnet, dass** innerhalb der Zeitbereiche als repräsentativer Wert eine Standardabweichung ermittelt wird.

## Claims

1. A method for generating and triggering a pause recommendation to the driver of a vehicle in the following steps:
- detecting measurement data corresponding to a driving behaviour of the driver and/or
- detecting measurement data corresponding to a driving situation of the vehicle, **characterized by**
- considering the measurement data in at least two time ranges
- detecting at least one set representative value of the measurement data in each of the at least two time ranges
- calculating a pause recommendation with the aid of a set vigilance index on the basis of the at least two representative values
- emitting the pause recommendation to the driver of the vehicle.

2. The method according to claim 1, **characterized in that** the measurement data are considered in a time range < 1 minute.

3. The method according to one of the preceding claims, **characterized in that** the measurement data are considered in a time range < 15 minutes.

4. The method according to one of the preceding claims, **characterized in that** the measurement data are considered in a time range between 15 to 120 minutes.

5. The method according to one of the preceding claims, **characterized in that** the measurement data are considered in a time range > 120 minutes.

6. The method according to one of the preceding claims, **characterized in that** the measurement data considered in the different time ranges are accumulated.

7. The method according to one of the preceding claims, **characterized in that** within the time ranges a central value is detected as a representative value.

8. The method according to one of the preceding claims, **characterized in that** within the time ranges a minimum is detected as a representative value.

9. The method according to one of the preceding claims, **characterized in that** within the time ranges a maximum is detected as a representative value.

10. The method according to one of the preceding claims, **characterized in that** within the time ranges a standard deviation is detected as a representative value.

## Revendications

1. Méthode de génération et de déclenchement d'une recommandation de pause au conducteur d'un véhicule dans les étapes suivantes:
- déterminer les données de mesure correspondantes à un comportement de conduite du conducteur et/ou
- déterminer des données de mesure correspondantes à une situation de conduite du véhicule, **caractérisé par**
- considérer les données de mesure dans au moins deux plages temporelles différentes
- déterminer au moins une valeur représentative prédéfinie des données de mesure dans chacune des au moins deux plages temporelles
- calculer une recommandation de pause en utilisant un indice de vigilance prédéfini basé sur les au moins deux valeurs représentatives
- émettre la recommandation de pause au conducteur du véhicule.

2. Procédé selon la revendication 1, **caractérisé en ce que** les données de mesure sont considérées dans une plage temporelle < 1 minute.

3. Procédé selon l'une des revendications précédentes, **caractérisé en ce que** les données de mesure sont considérées dans une plage temporelle < 15 minutes.

4. Procédé selon l'une des revendications précédentes, **caractérisé en ce que** les données de mesure sont considérées dans une plage temporelle de 15 à 120 minutes.

5. Procédé selon l'une des revendications précédentes, **caractérisé en ce que** les données de mesure sont considérées dans une plage temporelle > 120 minutes.

6. Procédé selon l'une des revendications précédentes, **caractérisé en ce que** les données de mesure considérées dans les différentes plages temporelles sont cumulées.

7. Procédé selon l'une des revendications précédentes, **caractérisé en ce qu'**une valeur moyenne est déterminée dans les plages temporelles en tant que valeur représentative.

8. Procédé selon l'une des revendications précédentes, **caractérisé en ce qu'**un minimum est déterminé dans les plages temporelles en tant que valeur représentative.

9. Procédé selon l'une des revendications précédentes, **caractérisé en ce qu'**un maximum est déterminé dans les plages temporelles en tant que valeur représentative.

10. Procédé selon l'une des revendications précédentes, **caractérisé en ce qu'**une déviation standard est déterminée dans les plages temporelles en tant que valeur représentative.
